# EUROPEAN PATENT APPLICATION

(11) **EP 4 542 927 A1**
(43) Date of publication of application: **23.04.2025**
(21) Application number: 23203954.5
(22) Date of filing: 17.10.2023
(51) Int. Cl.: H04L 9/40

(54) **METHOD FOR DEFINING AT LEAST ONE SET OF RULES, METHOD FOR APPLYING A SET OF RULES BY A LAN, CORRESPONDING COMPUTER PROGRAM PRODUCT AND DEVICES**

(71) Applicant: Nagravision Sarl, 1033 Cheseaux-sur-Lausanne (CH)
(72) Inventor: DYKSTRA-ERICKSON, Elizabeth, 1033 CHESEAUX-SUR-LAUSANNE (CH); BUFFARD, Christophe, 1033 CHESEAUX-SUR-LAUSANNE (CH); BUFFARD, Laura, 1033 CHESEAUX-SUR-LAUSANNE (CH)
(74) Representative: Ipside

(57) **Abstract**

A method is proposed for defining, in an authority center, at least one set of rules defining access conditions to internet services for a user terminal. Such method comprises:

- receiving, from a master terminal, the at least one set of rules;

- identifying the user terminal for which the set of rules applies;

- obtaining a unique identifier for said user terminal and a cryptographic function; and

- sending the cryptographic function and the unique identifier to the identified user terminal.

The method additionally comprises:

- receiving a connection request at the communications network from the user terminal;

- receiving, from the user terminal, a one-time identifier generated using a cryptographic function and the unique identifier, the cryptographic function and the unique identifier being known from the authority center;

- transmitting the one-time identifier to the authority center;

- receiving, from the authority center, the set of rules associated to the unique identifier extracted from the one-time identifier;

- applying the set of rules while the user terminal is accessing internet services.

## Description

### 1. FIELD OF THE DISCLOSURE

The field of the disclosure is that of the control of the access to internet services by a user terminal.

More specifically, the disclosure relates to a method for such controlling when the user terminal accesses the internet services through a communications network of the local area network (LAN) type, e.g. a Wi-Fi network, an ethernet network, ....

The disclosure can be of interest in any field wherein such access to internet services through a communications network of the LAN type occurs. This is the case for instance in the context of the connection to hotspots in various areas like school, restaurants, ...

### 2. TECHNOLOGICAL BACKGROUND

The access to internet resources can be limited or enabled for a given user terminal (e.g. a smartphone, a computer, a tablet, ...). For instance, parents can set rules to block or control access to services on the internet for the user terminal of their kid. Such rules apply on the LAN of the home, e.g. based on a programming of the home router or gateway. However, in such case the rules apply only locally, when accessing the internet from home, and more particularly from the home LAN.

Alternatively, some prior art solutions are based on a dedicated Domain Name System (DNS) server. This allows controlling the access even when not at home. However, DNS is only limited to grant or deny access to certain websites. But it fails to define time limits, duration or even actions within a website as can be set at home based on a programming of the home router or gateway.

There is thus a need for having the rules that have been defined for a user terminal that accesses internet services e.g. through a home router, that still apply while the user terminal goes to another place and accesses internet services through another LAN (e.g. the LAN of a school, of a household or internet café, ...). In other words, there is a need for having the rules that have been defined for a user terminal to be portable in the context of roaming from a LAN to another LAN.

Conversely, in the context of the access to internet services when going through a LAN, the user terminal may remain as not identified by the router or the gateway the user terminal is connected to. For instance, in the context of a WiFi connection, it is known that the Media Access Control (MAC) address can be randomized. This allows in particular avoiding user's tracking. Such respect for privacy is of importance nowadays.

There is thus a need for having the anonymity of the user terminal to be preserved while having the rules that have been defined for the user terminal to be portable in the context of roaming from a LAN to another LAN.

### 3. SUMMARY

A particular aspect of the present disclosure relates to a method for defining, in an authority center, at least one set of rules defining access conditions to internet services for a user terminal. Such method comprises:
- receiving, from a master terminal, the at least one set of rules;
- identifying the user terminal for which the set of rules applies;
- obtaining a unique identifier for said user terminal and a cryptographic function; and
- sending the cryptographic function and the unique identifier to the identified user terminal.

Thus, the present disclosure proposes a new and inventive solution for having the anonymity of the user terminal to be preserved while having the rules that have been defined for accessing to the internet to be portable in the context of roaming from a LAN to another LAN (e.g. a Wi-Fi network, a WiMAX network, an ethernet network).

More particularly, the population of the set(s) of rules in the authority center (e.g. implemented in a remote server communicatively connected to different LANs through the internet) allows the authority center to provide said set(s) of rules to different LANs, thus allowing the portability of said rules. However, the sharing of the cryptographic function and of the unique identifier between the user terminal and the authority center allows the generation of a one-time identifier for requesting one set of rules, e.g. in the context of roaming. This thus preserves the anonymity of the user terminal when accessing the authority center from different communications networks. Indeed, such one-time identifier cannot be decrypted by a device (e.g. a router or a gateway) belonging to a given communications network as the cryptographic function is unknown from such device. The cryptographic function is indeed not populated in any device belonging to the communications network itself. The cryptographic function is rather populated only in the user terminal and in the authority center according to the present method.

In some embodiments, the user terminal and the master terminal are a same terminal.

In some embodiments, the user terminal and the master terminal are different terminals. The identifying the user terminal comprises:
- receiving, from the master terminal, a first identifier associated to the user terminal; and
- receiving, from the user terminal, a second identifier.

The sending the cryptographic function and the unique identifier to the user terminal is executed only if the first identifier and the second identifier are a same identifier.

Another aspect of the present disclosure relates to a method for applying, by a communications network of the LAN type communicatively connected to the internet, a set of rules defining access conditions to the internet services for a user terminal. The set of rules is associated to a unique identifier of the user terminal in an authority center. Such method comprises:
- receiving a connection request at the communications network from the user terminal;
- receiving, from the user terminal, a one-time identifier generated using a cryptographic function and the unique identifier, the cryptographic function and the unique identifier being known from the authority center;
- transmitting the one-time identifier to the authority center;
- receiving, from the authority center, the set of rules associated to the unique identifier extracted from the one-time identifier;
- applying the set of rules while the user terminal is accessing internet services.

Thus, the communications network accesses the rules without having the knowledge of the identity of the user terminal. Indeed, the one-time identifier cannot be decrypted by any device (e.g. a router or a gateway) of the communications network as the cryptographic function is unknown from such device. Such cryptographic function is populated in the user terminal and in the authority center.

In some embodiments, the method comprises: sending, to the authority center, a profile identifying at least one feature of the communications network. The set of rules is further associated to the profile in the authority center.

Thus, the set of rules to apply depends on the type of LAN the user device is communicatively connected to. For instance, the rules to apply are different when the user terminal is communicatively connected to a LAN belonging to a school, or to a library or to a restaurant, etc. In this case, the authority center comprises different sets of rules, the selection of the set of rules being dependent of the type of LAN requesting the rules.

In some embodiments, the method comprises: sending, to a master terminal, a report on the internet services accessed by the user terminal or the type of LAN on which the user terminal has requesting access.

For instance, parents can be informed of the activity of the terminal equipment of their kids.

In some embodiments, the set of rules comprises at least one rule belonging to the group comprising:
- a website that can never be accessed by the user terminal;
- a website that can always be accessed by the user terminal;
- a time of day during which the access to internet services is authorized by the user terminal; and
- a duration of access to internet services for the user terminal.

Another aspect of the present disclosure relates to a computer program product comprising program code instructions for implementing the above-mentioned method for defining at least one set of rules (in any of the different embodiments discussed above), when said program is executed on a computer or a processor.

Another aspect of the present disclosure relates to a computer program product comprising program code instructions for implementing the above-mentioned method for applying at least one set of rules (in any of the different embodiments discussed above), when said program is executed on a computer or a processor.

Another aspect of the present disclosure relates to a first electronic device configured for implementing all or part of the steps of the above-mentioned method for defining at least one set of rules (in any of the different embodiments discussed above). Thus, the features and advantages of this device are the same as those of the corresponding steps of said method. Therefore, they are not detailed any further.

Another aspect of the present disclosure relates to a server comprising a first electronic device as discussed above (in any of the different embodiments discussed above).

Another aspect of the present disclosure relates to a second electronic device configured for implementing all or part of the steps of the above-mentioned method for applying at least one set of rules (in any of the different embodiments discussed above). Thus, the features and advantages of this device are the same as those of the corresponding steps of said method. Therefore, they are not detailed any further.

Another aspect of the present disclosure relates to a router or a gateway comprising a second electronic device as discussed above (in any of the different embodiments discussed above).

### 4. LIST OF FIGURES

Other features and advantages of embodiments shall appear from the following description, given by way of indicative and non-exhaustive examples and from the appended drawings, of which:
- Figure 1 illustrates an authority center communicatively connected to two LANs, a user terminal and a master terminal being connected to one of the LANs, according to one embodiment of the present disclosure;
- Figure 2 illustrates an example of the structural blocks of an electronic device allowing all or part of the steps of the method of Figure 4 and Figure 4a to be executed by the authority center of Figure 1;
- Figure 3 illustrates an example of the structural blocks of an electronic device allowing all or part of the steps of the method of Figure 5 to be executed by the LANs of Figure 1;
- Figure 4 illustrates the steps of a method for defining at least one set of rules according to one embodiment of the present disclosure;
- Figure 4a illustrates the steps executed during the step of identification of the user terminal of the method of Figure 4 according to one embodiment of the present disclosure; and
- Figure 5 illustrates the steps of a method for applying, by a LAN, a set of rules according to one embodiment of the present disclosure.

### 5. DETAILED DESCRIPTION

In all of the Figures of the present document, the same numerical reference signs designate similar elements and steps.

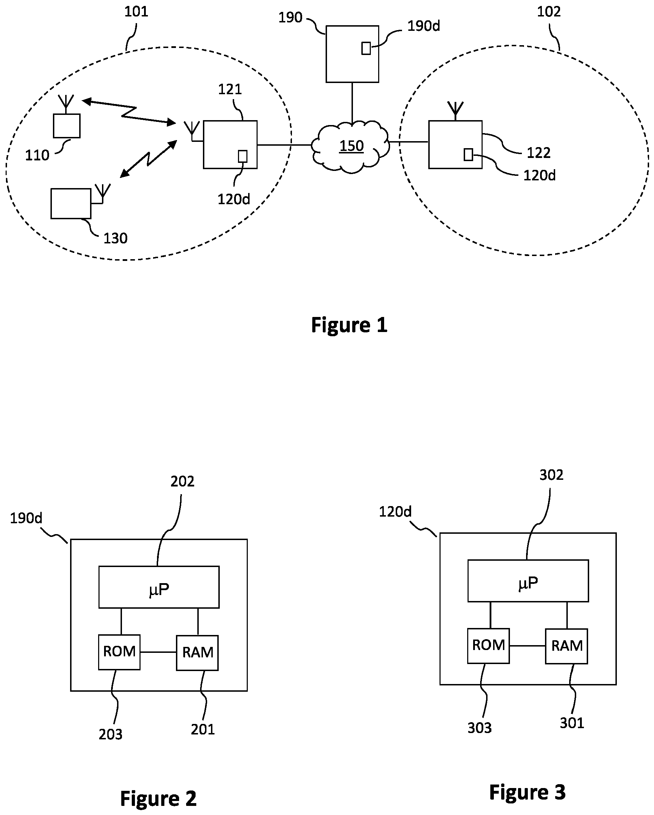

Referring now to **Figure 1****,** we describe an authority center 190 communicatively connected to two LANs 101, 102, a user terminal 110 (e.g. a smartphone, a tablet or a personal computer equipped with a wireless communications module, ...) and a master terminal 130 (e.g. a smartphone, a tablet or a personal computer equipped with a wireless communications module, ...) being connected to one of the LANs 101, 102 according to one embodiment of the present disclosure.

More particularly, the authority center 190 (e.g. implemented in a server) is communicatively connected to the two LANs 101, 102 going through a communications network 150. For instance, the communications network 150 implements wired connections, e.g. of a xDSL type. Such connections implement for instance an internet protocol. However, in some embodiments, the communications network 150 implements wireless communications links, e.g. based on a cellular protocol (e.g. a 3GPP 2G, 3G, 4G or 5G protocol).

Back to Figure 1, the first LAN 101 and the second LAN 102 are wireless LANs, e.g. a Wi-Fi network or a WiMAX network. The user terminal 110 and the master terminal 130 are communicatively connected to a gateway 121 of the first LAN 101. In other embodiments, the user terminal 110 and/or the master terminal 130 are communicatively connected to a router of the first LAN 101. In some embodiments, the first LAN 101 and/or the second LAN are LANs implementing wired communication links, e.g. based on an ethernet protocol.

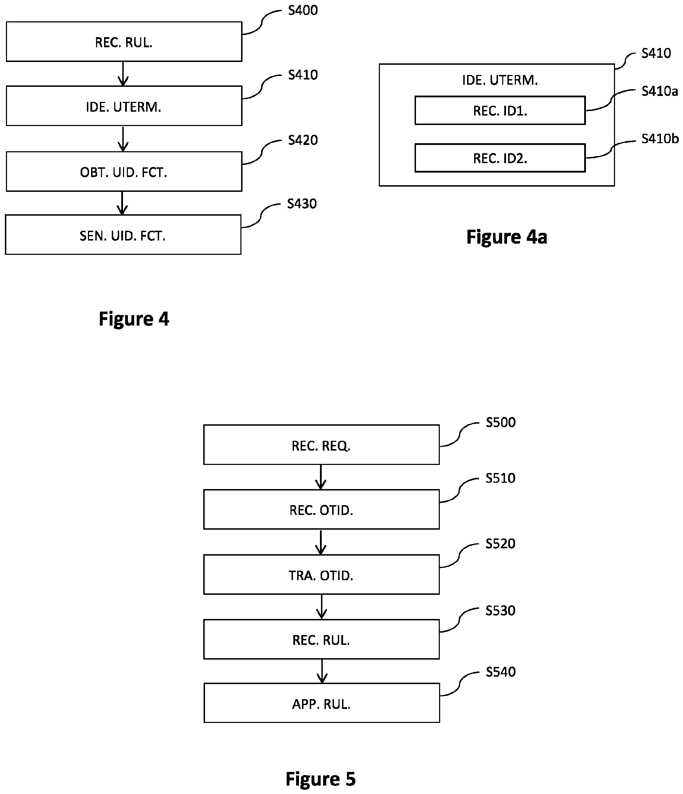

Back to Figure 1, the master terminal 130 allows defining set(s) of rules in the authority center 190 according to the method disclosed below in relation with Figure 4 and Figure 4a. More particularly, such rules define access conditions to internet services for the user terminal 110. For instance, such rules belong to the group comprising:
- a website that can never be accessed by the user terminal 110;
- a website that can always be accessed by the user terminal 110;
- a time of day during which the access to internet services is authorized by the user terminal 110; and
- a duration of access to internet services for the user terminal 110.

Back to Figure 1, the master terminal 130 sends the set of rules to the authority center 190. Conversely, the authority center 190 receives and stores the set of rules sent by the master terminal 130. This allows the authority center 190 to provide the set of rules to a LAN, e.g. the first LAN 101, following the method disclosed below in relation with Figure 5 for having the LAN to apply the set of rules while the user terminal 110 is accessing internet services.

In some embodiments, the master terminal 130 does not send the set of rules to the authority center 190 going through a LAN 101. Indeed, according to the present technic, only the application of the rules involves a LAN 101 or 102. Consequently, in some embodiments, the sending of the rules by the master terminal 130 to the authority center 190 and/or the sending of the cryptographic function and the unique identifier to the user terminal 110 (method of Figure 4 and Figure 4a) does not go through a LAN (e.g. the first LAN 101), but rather involves only a communications network which is not of the LAN type, e.g. such as the communications network 150.

In some embodiments, the master terminal 130 and the user terminal 110 are a same terminal equipment.

In order to be able to execute the steps of the method for defining at least one set of rules disclosed below in relation with Figure 4 and Figure 4a, the authority center 190 comprises an electronic device 190d comprising means configured for executing said method. More particularly, in some embodiments the device 190d comprises **(****Figure 2****):**
- a non-volatile memory 203 (e.g. a read-only memory (ROM), a hard disk, a flash memory, etc.);
- a volatile memory 201 (e.g. a random-access memory or RAM) and a processor 202.

The non-volatile memory 203 is a non-transitory computer-readable carrier medium. It stores executable program code instructions, which are executed by the processor 202 in order to enable implementation of some steps of the method described below (method for defining at least one set of rules) in the various embodiments disclosed below in relationship with Figure 4 and Figure 4a.

Upon initialization, the aforementioned program code instructions are transferred from the non-volatile memory 203 to the volatile memory 201 so as to be executed by the processor 202. The volatile memory 201 likewise includes registers for storing the variables and parameters required for this execution.

The steps of the method for defining at least one set of rules may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In order to be able to execute the steps of the method for applying a set of rules disclosed below in relation with Figure 5, the gateway 121, 122 comprises an electronic device 120d comprising means configured for executing said method. More particularly, in some embodiments the device 120d comprises (**Figure 3**):
- a non-volatile memory 303 (e.g. a read-only memory (ROM), a hard disk, a flash memory, etc.);
- a volatile memory 301 (e.g. a random-access memory or RAM) and a processor 302.

The non-volatile memory 303 is a non-transitory computer-readable carrier medium. It stores executable program code instructions, which are executed by the processor 302 in order to enable implementation of some steps of the method described below (method for applying a set of rules) in the various embodiments disclosed below in relationship with Figure 5.

Upon initialization, the aforementioned program code instructions are transferred from the non-volatile memory 303 to the volatile memory 301 so as to be executed by the processor 302. The volatile memory 301 likewise includes registers for storing the variables and parameters required for this execution.

The steps of the method for applying a set of rules may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In some embodiments, the electronic device 120d is implemented in a router of a LAN.

Referring now to **Figure 4****,** we describe a method for defining at least one set of rules according to one embodiment of the present disclosure.

More particularly, in a **step S400,** the authority center 190 receives, from the master terminal 130, a set of rules. Conversely, during step S400, the master terminal 130 sends the set of rules to the authority center 190. In an embodiment, a selection of set of rules are available at the authority center 190 and the master terminal 130 selects one set of rules to be applied for the user terminal 110. As discussed above in relation with Figure 1, such rule defines access conditions to internet services for the user terminal 110. For instance, the rules are defined by a user of the master terminal 130 through a dedicated application running on the master terminal 130.

In some embodiments, the authority center 190 receives, from the master terminal 130, different sets of rules. For instance, the different sets of rules can be defined depending on the type of LAN the user terminal 110 is expected to connect to. For instance, the rules to apply are different when the user terminal 110 is communicatively connected to a LAN belonging to a school, or to a library or to a restaurant, etc.

Back to Figure 4, in a **step S410,** the authority center 190 identifies the user terminal 110 for which the set of rules received during the step S400 apply.

In a **step S420,** the authority center 190 obtains a unique identifier for the user terminal 110 identified during step S410, as well as a cryptographic function. For instance, in some implementations, the authority center 190 generates the unique identifier and the cryptographic function. In other implementations, different couples of unique identifiers and associated cryptographic functions are prestored in the authority center 190. In this case, the authority center 190 selects (e.g. randomly) the unique identifier and the cryptographic function among the prestored couples.

Back to Figure 4, in a **step S430,** the authority center 190 sends the cryptographic function and the unique identifier obtained during step S420 to the user terminal 110 identified during step S410.

Thus, the population of the set(s) of rules in the authority center 190 (e.g. implemented in a server communicatively connected to different LANs 101, 102 through the internet as discussed above in relation with Figure 1) allows the authority center 190 to provide said set(s) of rules to different LANs 101, 102 thus allowing the portability of said rules.

In embodiments discussed above in relation with Figure 1 wherein the user terminal 110 and the master terminal 130 are a same terminal equipment, during the step S410, the authority center 190 identifies directly the user terminal 110 it is connected to (e.g. through identification information provided by the user terminal 110 when establishing the connection). In this example, the transmission of the cryptographic function is executed during the set-up phase of the set of rules.

Conversely, in the embodiment of **Figure 4a****,** the user terminal 110 and the master terminal 130 are assumed to be different terminals. Thus, during the step S410, the authority center 190 executes:
- a **step S410a** wherein the authority center 190 receives, from the master terminal 130, a first identifier associated to the user terminal 110; and
- a **step S410b** wherein the authority center 190 receives, from the user terminal 110, a second identifier.

In this case, the step S430 is thus executed only if the first identifier and the second identifier are a same identifier. For instance, the first identifier and the second identifier are the same identifier which is prestored in the master terminal 130 and the user terminal 110. This results e.g. from a pairing between the master terminal 130 and the user terminal 110. In this example, to complete the set-up phase, the user terminal 110 is required to connect with the authority center 190 and transmit its identifier (the second identifier). The authority center 190 scans its database to check if a first identifier matching the second identifier is present and in the positive event, transmits the cryptographic function related to the user terminal 110.

Referring now to **Figure 5****,** we describe a method for applying, by a LAN 101, 102 a set of rules according to one embodiment of the present disclosure. As discussed above, such rules define access conditions to the internet services for the user terminal 110. The set of rules is associated to a unique identifier of the user terminal 110 in the authority center 190.

More particularly, in a **step S500,** the gateway 121 receives a connection request from the user terminal 110.

This corresponds to the configuration of Figure 1, taken as an illustrative example in the sequel, wherein the user terminal 110 is communicatively connected to the first LAN 101. However, in other cases, e.g. during the roaming of the user terminal 110 from the first LAN 101 toward the second LAN 102, this is the gateway 122 that receives a connection request from the user terminal 110.

Back to Figure 5, in a **step S510,** the gateway 121 receives from the user terminal 110, a one-time identifier generated using a cryptographic function and the unique identifier.

For instance, the cryptographic function and the unique identifier have been populated by the authority center 190 in the user terminal 110 by execution of the method for defining at least one set of rules discussed above in relation with Figure 4 and Figure 4a (in any of the embodiments discussed above in relation with Figure 4 and Figure 4a). Alternatively, the cryptographic function and the unique identifier have been prestored both in the user terminal 110 and in the authority center 190 during a pairing phase, or during manufacturing.

Back to Figure 5, in a **step S520,** the gateway 121 transmits the one-time identifier to the authority center 190.

In a **step S530,** the gateway 121 receives, from the authority center 190, the set of rules associated to the unique identifier extracted from the one-time identifier.

Indeed, as discussed above, the cryptographic function and the unique identifier are known from the authority center 190 so that the authority center 190 can decrypt the one-time identifier and extract the unique identifier.

For instance, the one-time identifier has been generated by the user terminal 110 as the result of the cryptographic function taking as argument the concatenation of the unique identifier and of a random number. In this case, the authority center 190 decrypts the one-time identifier based on the cryptographic function, resulting in the concatenation of the unique identifier and of a random number. By discarding the random number part, the authority center 190 obtains the unique identifier. This unique identifier is used to determine which user terminal is requesting the access to internet services and which set of rules should be applied for the gateway.

The random number can be replaced by a time stamp. The time stamp is a transient value that change over time. This has the further advantage to avoid replaying the one-time identifier since the authority center 190 will only accept fresh timestamps. The authority center 190 can determine a window during which the timestamp is accepted, for example 10 seconds. In case that the timestamp exhibits an older time, the one-time identifier is discarded.

Back to Figure 5, in a **step S540,** the gateway 121 applies the set of rules while the user terminal 110 is accessing internet services. The access to internet services by the user terminal 110 is thus controlled by the gateway 121 itself.

According to the present method, the LAN 101 accesses the rules without having the knowledge of the identity of the user terminal 110. Indeed, the one-time identifier cannot be decrypted by any device (e.g. a router or the gateway 121) of the LAN 101 as the cryptographic function is unknown from such device. Such cryptographic function is populated only in the user terminal 110 and in the authority center 190, and not in any device belonging to the LAN 101 itself. This thus preserves the anonymity of the user terminal 110 when accessing the authority center 190 from different LANs 101, 102.

In some embodiments, the gateway 121 or 122 the user terminal 110 is connected to sends, to the authority center 190, a profile identifying at least one feature of the LAN 101 or 102. In some of those embodiments, the authority center, after having determined which user terminal 110 is requesting the access, can further select the set of rules dedicated to this type of LAN 101 or 103, using the profile of the gateway 121 or 122 as selection criteria. The set of rules received during the execution of the step S530 is then associated with the user terminal 110 and the profile of the gateway 121 or 122.

Thus, the set of rules to apply depends on the type of LAN 101 or 102 the user device 110 is communicatively connected to. For instance, the rules to apply are different when the user terminal 110 is communicatively connected to a LAN 101 or 102 belonging to a school, or to a library or to a restaurant, etc.

In some embodiments, the gateway 121 or 122 the user terminal 110 is connected to sends, to the master terminal 130, a report on the user terminal activity related to internet services. For instance, parents can thus be informed of the activity of the terminal equipment 110 of their kids by receiving a notification identifying the type of LAN (gateway) for which a request for connection was executed by the user terminal or the internet services requested by the user terminal.

In some embodiments discussed above in relation with Figure 1, the device 120d is implemented in a router of the LAN 101 or 102 rather than in a gateway 121 or 122. In such cases, the method of Figure 5 (in any of the embodiments discussed above in relation with Figure 5) is executed by such router. However, in any case the method of Figure 5 (in any of the embodiments discussed above in relation with Figure 5) is executed by a communications network 101, 102 of the LAN type communicatively connected to the internet.

In one embodiment, the cryptographic function comprises a cryptographic engine implementing an asymmetric algorithm (such as RSA) associated with a cryptographic keypair. The cryptographic engine is common to all user terminals 110 and the cryptographic key is the public key of the authority center 190. Loading the cryptographic function is this case means loading the public cryptographic key pertaining to said authority center 190. At the reception of the one-time identifier, the private key of the public/private key pair is used to decrypt the one-time identifier and then the authority center 190 can extract the unique identifier of the user terminal 110.

## Claims

1. Method for defining, in an authority center (190), at least one set of rules defining access conditions to internet services for a user terminal (110),
**characterized in that** the method comprises:
- receiving (S400), from a master terminal (130), the at least one set of rules;
- identifying (S410) the user terminal for which the set of rules applies;
- obtaining (S420) a unique identifier for said user terminal and a cryptographic function; and
- sending (S430) the unique identifier and the cryptographic function to the identified user terminal.

2. Method according to claim 1, wherein the user terminal and the master terminal are a same terminal.

3. Method according to claim 1, wherein the user terminal and the master terminal are different terminals,
and wherein the identifying (S410) the user terminal comprises:
- receiving (S410a), from the master terminal, a first identifier associated to the user terminal; and
- receiving (S410b), from the user terminal, a second identifier,
wherein said sending the cryptographic function and the unique identifier to the user terminal is executed only if the first identifier and the second identifier are a same identifier.

4. Method for applying, by a communications network (101, 102) of the LAN type communicatively connected to the internet, a set of rules defining access conditions to the internet services for a user terminal (110), the set of rules being associated to a unique identifier of the user terminal in an authority center (190),
**characterized in that** the method comprises:
- receiving (S500) a connection request at the communications network (102) from the user terminal (110);
- receiving (S510), from the user terminal, a one-time identifier generated using a cryptographic function and the unique identifier, the cryptographic function being known from the authority center;
- transmitting (S520) the one-time identifier to the authority center;
- receiving (S530), from the authority center, the set of rules associated to the unique identifier extracted from the one-time identifier; and
- applying (S540) the set of rules while the user terminal is accessing internet services.

5. Method according to claim 4, comprising:
- sending, to the authority center, a profile identifying at least one feature of the communications network,
wherein the set of rules is further associated to the profile in the authority center.

6. Method according to claim 4 or 5, comprising:
- sending, to a master terminal, a report on the internet services accessed by the user terminal.

7. Method according to any of the claims 1 to 6, wherein the set of rules comprises at least one rule belonging to the group comprising:
- a website that can never be accessed by the user terminal;
- a website that can always be accessed by the user terminal;
- a time of day during which the access to internet services is authorized by the user terminal; and
- a duration of access to internet services for the user terminal.

8. Computer program product **characterized in that** it comprises program code instructions for implementing a method according to any of the claims 1 to 7.

9. Electronic device (190d) for defining, at least one set of rules defining access conditions to internet services for a user terminal (110),
**characterized in that** it comprises a processor (202) or a dedicated computing machine configured for:
- receiving (S400), from a master terminal (130), the at least one set of rules;
- identifying (S410) the user terminal for which the set of rules applies;
- obtaining (S420) a unique identifier for said user terminal and a cryptographic function; and
- sending (S430) the unique identifier and the cryptographic function to the identified user terminal.

10. Electronic device (120d) for applying, by a communications network (101, 102) of the LAN type communicatively connected to the internet, a set of rules defining access conditions to the internet services for a user terminal (110), the set of rules being associated to a unique identifier of the user terminal in an authority center (190), **characterized in that** it comprises a processor (202) or a dedicated computing machine configured for:
- receiving (S500) a connection request at the communications network (102) from the user terminal (110);
- receiving (S510), from the user terminal, a one-time identifier generated using a cryptographic function and the unique identifier, the cryptographic function and the unique identifier being known from the authority center;
- transmitting (S520) the one-time identifier to the authority center;
- receiving (S530), from the authority center, the set of rules associated to the unique identifier extracted from the one-time identifier; and
- applying (S540) the set of rules while the user terminal is accessing internet services.

11. Server (190) comprising an electronic device (190d) according to claim 9.

12. Router or gateway (121, 122) comprising an electronic device (120d) according to claim 10.
